# FASCICULE DE BREVET EUROPEEN

(11) **EP 2 834 508 B1**
(45) Date de publication et mention de la délivrance du brevet: **08.06.2016**
(21) Numéro de dépôt: 13715336.7
(22) Date de dépôt: 15.03.2013
(51) Int. Cl.: F02D 41/00, F02D 41/24, F02B 37/24, F02D 23/00

(54) **SYSTÈME DE COMMANDE DES AILETTES D'UNE TURBINE À GÉOMÉTRIE VARIABLE À APPRENTISSAGE ET LINÉARISATION**
SYSTEM ZUR STEUERUNG DER LEITSCHAUFELN EINER TURBINE MIT VARIABLER GEOMETRIE MIT ERLERNUNG UND LINEARISIERUNG
SYSTEM FOR CONTROLLING THE VANES OF A VARIABLE GEOMETRY TURBINE WITH LEARNING AND LINEARISATION

(30) Priorité: 28.03.2012 FR 1252760
(43) Date de publication de la demande: 11.02.2015
(73) Titulaire: Renault s.a.s., 92100 Boulogne Billancourt (FR)
(72) Inventeur: FONTVIEILLE, Laurent, F-91190 Gif-sur-yvette (FR); BATARD, Samuel, F-91150 Briere Les Scellees (FR)
(86) Numéro de dépôt international: PCT/FR2013/050555
(87) Numéro de publication internationale: WO 2013/144481

(56) Documents cités:
- DE-A1- 19 751 977
- FR-A1- 2 872 547
- FR-A1- 2 902 467
- FR-A1- 2 911 918

## Description

L'invention a pour domaine technique le contrôle de moteurs, et plus particulièrement le contrôle de moteurs munis de turbines à géométrie variable.

Un turbocompresseur pour moteur à combustion interne comprend une turbine associée à un compresseur dans le but d'augmenter la quantité d'air admise dans les cylindres du moteur. La turbine est placée à la sortie du collecteur d'échappement et est entraînée par les gaz d'échappement. Dans certaines turbines, la puissance fournie par les gaz d'échappement à la turbine est modulée en modifiant la disposition d'ailettes. Une telle turbine est appelée turbine à géométrie variable (acronyme TGV). Le compresseur, monté sur le même axe que la turbine, comprime l'air qui entre dans le collecteur d'admission.

Un actionneur est utilisé pour piloter l'ouverture et la fermeture des ailettes de la turbine. Le signal de commande de l'actionneur est fourni par une unité de commande électronique (UCE) et permet d'asservir la pression de suralimentation dans le collecteur d'admission via un capteur de pression. Les niveaux de pression de suralimentation augmentent avec l'augmentation des performances des moteurs diesel suralimentés. Les turbocompresseurs sont, par conséquent, de plus en plus sollicités. Il est alors important de les piloter le plus finement possible pour éviter leur détérioration et pour améliorer le brio du véhicule lors des accélérations.

Actuellement, les régulations de pression de suralimentation se limitent à asservir la mesure de la pression de suralimentation (P_{sural,mes}) sur une consigne de la pression de suralimentation (P_{sural,cons}). Cette consigne de pression de suralimentation est souvent cartographiée en fonction de la vitesse de rotation du moteur et du débit de carburant. Un régulateur se charge ensuite de réguler la pression de suralimentation sur la consigne en modulant la position des ailettes de la TGV.

De plus, la commande en position des ailettes n'est pas directe. En effet, la commande de la régulation de suralimentation module généralement via une électrovanne un niveau de dépression (ou de pression) dans un poumon auquel est fixé la tige de commande des ailettes. Par poumon, on entend un organe à membrane mobile actionnée par un gaz et soumise à la force de rappel d'un ressort, la membrane étant liée mécaniquement à une tige de commande. La position de la tige de commande des ailettes est donc stable lorsque la force générée par la dépression est égale à la force du ressort de rappel.

Pour améliorer le temps de réponse de la boucle de régulation, une valeur de pré-positionnement de la soupape ou des ailettes peut être ajoutée au régulateur. Cette valeur de pré-positionnement se présente soit sous la forme d'une cartographie en vitesse de rotation du moteur et débit de carburant, soit sous la forme d'un algorithme de calcul permettant de modéliser le comportement du turbocompresseur, on parle alors de contrôle par modèle. Certains systèmes de commande disposent d'une information de la position de l'actionneur appelés abusivement systèmes de commande par recopie de position des ailettes. Cette information permet d'avoir une régulation en position de l'actionneur ou de la tige de commande, en aval de la régulation de suralimentation. Certain systèmes de commande comprennent une régulation en cascade avec une régulation de suralimentation suivie d'une régulation en position de l'actionneur de suralimentation. La régulation de suralimentation fournit alors une consigne de position à l'actionneur.

Le pré-positionnement permet de faire correspondre une valeur de commande des ailettes pour une pression de suralimentation de consigne donnée. Le pré-positionnement est calibré une fois et à partir d'essais faits sur un moteur nominal.

L'ensemble des dérives et des dispersions du système de commande vont donc rendre le pré-positionnement inadapté vis à vis de la consigne de suralimentation et c'est le régulateur qui va se charger de rattraper ces écarts de signal de commande. Le régulateur va annuler l'écart entre la consigne et la mesure de pression de suralimentation. Toutefois, quel que soit le type de régulateur utilisé, l'asservissement n'est pas instantané et le temps de réponse dépend des dispersions et des dérives du système.

Sur les régimes transitoires de forte charge (>75% de la pleine charge), les dérives et dispersions peuvent avoir de forts impacts en terme de temps de réponse de la suralimentation et de fiabilité du moteur.

Le document FR2831921 enseigne l'emploi d'un deuxième intégrateur permettant de mémoriser une unique correction appliquée à tout le pré-positionnement. L'apprentissage d'une valeur unique permet éventuellement de compenser les dispersions et les dérives mais uniquement dans une zone très limitée de la cartographie de prépositionnement et au risque d'introduire un écart supplémentaire sur les autres points.

Le document FR2872547 divulgue d'apprendre et de mémoriser la correction du régulateur de suralimentation sur tout le domaine de fonctionnement du moteur. Il suffit donc pour chaque point de fonctionnement (vitesse de rotation et couple du moteur) de stocker dans une table la correction apportée à la régulation de suralimentation afin que celle-ci soit instantanément appliquée.

L'invention a pour but d'améliorer la régulation de suralimentation d'une turbine à géométrie variable.

Un objet de l'invention est un système de commande des ailettes d'une turbine à géométrie variable alimentant un moteur à combustion interne d'un véhicule automobile, comprenant un soustracteur apte à déterminer l'écart entre une consigne de pression de suralimentation et une mesure de pression de suralimentation, un régulateur de type proportionnel, intégral, dérivée apte à émettre en sortie un signal de commande à destination des ailettes d'une turbine de type à géométrie variable, une cartographie de pré-positionnement apte à déterminer une consigne de position des ailettes en fonction de la vitesse de rotation du moteur et d'une consigne de couple, et un moyen de détermination des conditions d'apprentissage apte à émettre un signal logique de commande à destination d'un moyen d'apprentissage de la commande, le moyen d'apprentissage de la commande étant apte à émettre en sortie une correction du signal de commande à destination des ailettes d'une turbine de type à géométrie variable en fonction des signaux reçus de la cartographie de prépositionnement et du régulateur, le moyen d'apprentissage de la commande étant apte à apprendre les signaux de prépositionnement à réception d'un signal du moyen de détermination des conditions d'apprentissage.

Le moyen de détermination des conditions d'apprentissage peut comprendre un moyen de détermination des conditions de stabilité et un moyen de détermination des conditions d'état reliés en sortie à un opérateur logique ET.

Le moyen d'apprentissage de la commande peut comprendre un sommateur du signal de la partie intégrale du régulateur et du signal de la commande de pré-positionnement issu de la cartographie de prépositionnement, et un commutateur apte à autoriser la recopie de la valeur déterminée par le sommateur dans une cartographie de commande en fonction du signal reçu du moyen de détermination des conditions d'apprentissage.

La cartographie peut être apte à linéariser les signaux de la commande de pré-positionnement issus de la cartographie de prépositionnement lorsqu'une valeur déterminée par le sommateur n'est pas disponible.

Le système de commande peut comprendre une cartographie de linéarisation distincte de la cartographie reliée en entrée à la cartographie et en sortie au sommateur.

Le moyen de détermination des conditions de stabilité peut comprendre au moins un moyen de comparaison de paramètres physiques du moteur du véhicule à des valeurs de seuil, le moyen de détermination des conditions de stabilité étant apte à émettre en sortie un signal logique vrai relatif à la stabilité du fonctionnement du moteur du véhicule lorsque tous les moyens de comparaison émettent un signal vrai.

Le moyen de détermination des conditions d'état peut comprendre au moins un moyen de comparaison de paramètres physiques de l'environnement du véhicule à des valeurs de seuil, le moyen de détermination des conditions d'état étant apte à émettre en sortie un signal logique vrai relatif l'état de l'environnement du véhicule lorsque tous les moyens de comparaison émettent un signal vrai.

Le système de commande peut comprendre un multiplicateur apte à multiplier le signal portant la partie intégrale du régulateur par un coefficient de pondération prédéterminé mémorisé dans une cartographie de pondération, le signal émis par le multiplicateur étant reçu en entrée par le sommateur afin de le sommer au signal reçu de la cartographie de pré-positionnement.

La cartographie de pondération peut comprendre un coefficient de pondération prédéterminé compris entre 0 et 100% selon la consigne de charge du moteur.

Le signal de commande des ailettes peut être un signal en ouverture ou un signal en position.

L'apprentissage de la cartographie de linéarisation présente les avantages liés à la simplicité de sa mise oeuvre, à un faible coût en mémoire vive (un maximum de 16*2 octets suffit pour mémoriser une cartographie), un faible temps de réponse et une efficacité élevée pour compenser les dérives et dispersions du système de commande des ailettes.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principaux éléments d'un premier mode de réalisation d'un système de commande des ailettes d'une turbine à géométrie variable,
- la figure 2 illustre les principaux éléments d'un moyen de détermination des conditions de stabilité,
- la figure 3 illustre les principaux éléments d'un deuxième mode de réalisation d'un système de commande des ailettes d'une turbine à géométrie variable,
- la figure 4 illustre les principaux éléments d'un troisième mode de réalisation d'un système de commande des ailettes d'une turbine à géométrie variable, et
- la figure 5 illustre les principaux éléments d'un quatrième mode de réalisation d'un système de commande des ailettes d'une turbine à géométrie variable.

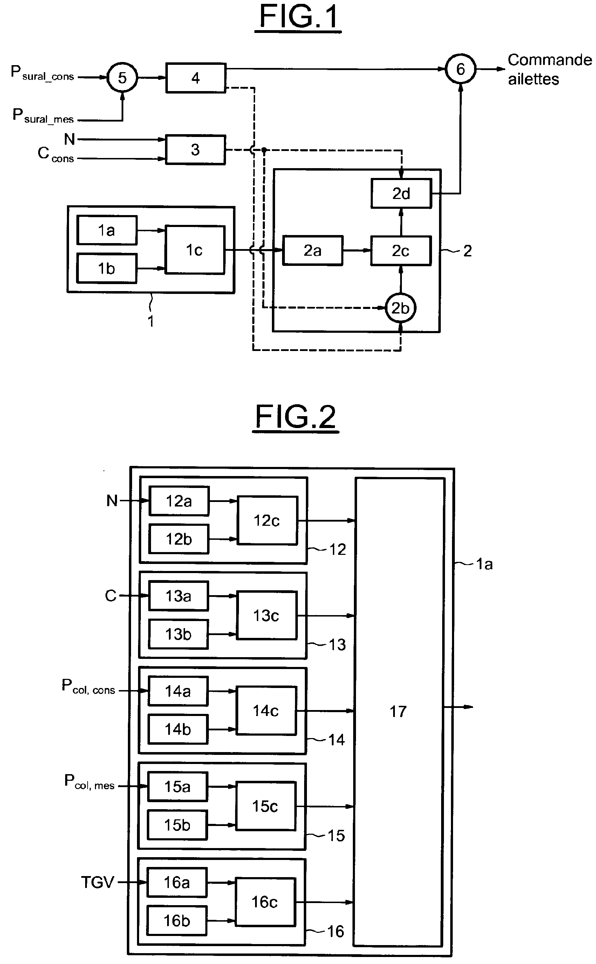

Sur la figure 1, on peut voir un système de commande des ailettes d'une turbine à géométrie variable comprenant un moyen de détermination 1 des conditions d'apprentissage, un moyen d'apprentissage 2 de la commande, une cartographie 3 de prépositionnement et un régulateur 4. Le régulateur 4 et le moyen de linéarisation 6 sont reliés en sortie à un sommateur 6 apte à émettre un signal de commande des ailettes d'une turbine à géométrie variable.

Le soustracteur 5 est apte à déterminer l'écart entre une consigne de pression de suralimentation P_{sural_cons} et une mesure de pression de suralimentation P_{sural_mes}. L'écart déterminé est communiqué à un régulateur 4 de type proportionnel, intégral, dérivée (PID). Le régulateur 4 émet en sortie un signal de commande à destination des ailettes d'une turbine de type à géométrie variable.

On peut voir également une cartographie 3 de prépositionnement apte à déterminer une consigne de position des ailettes en fonction de la vitesse de rotation N du moteur et d'une consigne de couple C_{cons} ainsi que le moyen de détermination 1 des conditions d'apprentissage comprenant un moyen de détermination la des conditions de stabilité et un moyen de détermination 1b des conditions d'état reliés en sortie à un opérateur logique ET référencé 1c.

Enfin, on peut voir un moyen d'apprentissage 2 de la commande relié en entrée au moyen de détermination 1 des conditions d'apprentissage, à la cartographie 3 de pré-positionnement et au régulateur 4. Le moyen d'apprentissage 2 de la commande est connecté en sortie à un sommateur 6 relié en entrée au régulateur 4 et en sortie à l'actionneur des ailettes de la turbine à géométrie variable.

Sur la figure 2, on peut voir que le moyen de détermination 1a des conditions de stabilité comprend un moyen de comparaison 12 de la vitesse de rotation du moteur, un moyen de comparaison 13 du couple du moteur, un moyen de comparaison 14 de la consigne de pression de suralimentation, un moyen de comparaison 15 de la mesure de pression de suralimentation et un moyen de comparaison 16 de la position des ailettes de la turbine à géométrie variable.

Le moyen de comparaison 12 de la vitesse de rotation du moteur comprend un moyen de détermination 12a apte à déterminer la valeur absolue de la dérivée temporelle de la vitesse de rotation du moteur reçue en entrée ainsi qu'une mémoire 12b comprenant un valeur maximale de la vitesse de rotation du moteur. Le moyen de comparaison comprend un comparateur 12c apte à émettre un signal logique égal à 1 si la dérivée de la vitesse de rotation du moteur est inférieure à la valeur maximale.

Les autres moyens de comparaison présentent une structure similaire.

Le moyen de comparaison 13 du couple du moteur comprend un moyen de détermination 13a apte à déterminer la valeur absolue de la dérivée temporelle du couple du moteur reçu en entrée ainsi qu'une mémoire 13b comprenant une valeur maximale du couple du moteur. Le moyen de comparaison comprend un comparateur 13c apte à émettre un signal logique égal à 1 si la dérivée du couple du moteur est inférieure à la valeur maximale.

Le moyen de comparaison 14 de la consigne de pression de suralimentation comprend un moyen de détermination 14a apte à déterminer la valeur absolue de la dérivée temporelle de la consigne de pression de suralimentation reçue en entrée ainsi qu'une mémoire 14b comprenant une valeur maximale de la consigne de pression de suralimentation. Le moyen de comparaison comprend un comparateur 14c apte à émettre un signal logique égal à 1 si la dérivée de la consigne de pression de suralimentation est inférieure à la valeur maximale.

Le moyen de comparaison 15 de la mesure de pression de suralimentation comprend un moyen de détermination 15a apte à déterminer la valeur absolue de la dérivée temporelle de la mesure de pression de suralimentation reçue en entrée ainsi qu'une mémoire 15b comprenant une valeur maximale de la mesure de pression de suralimentation. Le moyen de comparaison comprend un comparateur 15c apte à émettre un signal logique égal à 1 si la dérivée de la mesure de pression de suralimentation est inférieure à la valeur maximale.

Le moyen de comparaison 16 de la position des ailettes de la turbine à géométrie variable comprend un moyen de détermination 16a apte à déterminer la valeur absolue de la dérivée temporelle de la position des ailettes de la turbine à géométrie variable reçue en entrée ainsi qu'une mémoire 16b comprenant une valeur maximale de la position des ailettes de la turbine à géométrie variable. Le moyen de comparaison comprend un comparateur 16c apte à émettre un signal logique égal à 1 si la dérivée de la position des ailettes de la turbine à géométrie variable est inférieure à la valeur maximale.

Les moyens de comparaison 12,13,14,15,16 sont reliés en sortie à un opérateur logique ET référencé 17. L'opérateur logique 17 émet en sortie un signal de condition de stabilité égal à 1 lorsque chacun des moyens de comparaison émet en sortie un signal logique égal à 1, sinon il émet un signal logique égal 0.

Le moyen de détermination 1b des conditions d'état présente une structure similaire à celle du moyen de détermination 1a des conditions de stabilité.

Le moyen de détermination 1b des conditions d'état comprend un moyen de comparaison 18 de la température d'eau du moteur, un moyen de comparaison 19 de la tension de batterie, un moyen de comparaison 20 de l'altitude du véhicule, un moyen de comparaison 21 de la température atmosphérique, un moyen de comparaison 22 du remplissage du filtre à particules, un moyen de comparaison 23 de la vitesse de rotation du moteur, un moyen de comparaison 24 de la charge du moteur et un moyen de comparaison 25 de la pression différentielle de suralimentation.

Le moyen de comparaison 18 de la température d'eau du moteur comprend un comparateur 18a relié par une entrée à des capteurs de température de l'eau du moteur et par une autre entrée à une mémoire 18b comprenant une valeur de température minimale de l'eau du moteur, par exemple 90°C. Si la température mesurée est supérieure à la température minimale mémorisée, le comparateur 18a émet un signal logique 1, sinon il émet un signal logique 0.

Le moyen de comparaison 19 de la tension de batterie comprend un comparateur 19a relié par une entrée à des capteurs de tension de la batterie et par une autre entrée à une mémoire 19b comprenant une valeur nominale de la tension de la batterie. Si la tension mesurée est supérieure à la tension mémorisée, le comparateur 19a émet un signal logique 1, sinon il émet un signal logique 0.

Le moyen de comparaison 20 de l'altitude du véhicule comprend un comparateur 20a relié par une entrée à des capteurs d'altitude du véhicule et par une autre entrée à une mémoire 20b comprenant une valeur d'altitude de référence, par exemple 0 m. Si l'altitude mesurée est supérieure à l'altitude de référence mémorisée, le comparateur 20a émet un signal logique 1, sinon il émet un signal logique 0.

Le moyen de comparaison 21 de la température atmosphérique comprend un comparateur 21 a relié par une entrée à des capteurs de température atmosphérique et par une autre entrée à une mémoire 21b comprenant une valeur de température minimale, par exemple 20°C et une valeur de température maximale, par exemple 30°C. Si la température mesurée est comprise entre la température minimale mémorisée et la température maximale mémorisée, le comparateur 21 a émet un signal logique 1, sinon il émet un signal logique 0.

Le moyen de comparaison 22 du remplissage du filtre à particules comprend un comparateur 22a relié par une entrée à des capteurs ou estimateur de l'état de remplissage du filtre à particules et par une autre entrée à une mémoire 22b comprenant une valeur de remplissage maximale du filtre à particules, par exemple 0% pour un filtre vide. Si le remplissage mesuré est inférieur au remplissage maximal mémorisé, le comparateur 22a émet un signal logique 1, sinon il émet un signal logique 0.

Le moyen de comparaison 23 de la vitesse de rotation du moteur comprend un comparateur 23a relié par une entrée à des capteurs de vitesse de rotation du moteur et par une autre entrée à une mémoire 23b comprenant une valeur de vitesse de rotation minimale, par exemple 1750 tr/min et une valeur de vitesse de rotation maximale, par exemple 4500 tr/min. Si la vitesse de rotation mesurée est comprise entre la vitesse de rotation minimale mémorisée et la vitesse de rotation maximale mémorisée, le comparateur 23a émet un signal logique 1, sinon il émet un signal logique 0.

Le moyen de comparaison 24 de la charge du moteur comprend un comparateur 24a relié par une entrée à des capteurs ou estimateur de la charge du moteur et par une autre entrée à une mémoire 24b comprenant une valeur seuil de charge du moteur, par exemple 75% de la pleine charge. Si la charge mesurée est supérieure à la valeur seuil de charge mémorisée, le comparateur 24a émet un signal logique 1, sinon il émet un signal logique 0.

Le moyen de comparaison 25 de la pression différentielle de suralimentation comprend un comparateur 25a relié par une entrée à des capteurs ou estimateur de la pression différentielle de suralimentation et par une autre entrée à une mémoire 25b comprenant une valeur maximale de pression différentielle de suralimentation, par exemple 30 mbars. Si la pression différentielle de suralimentation mesurée est inférieure à la pression différentielle de suralimentation mémorisée, le comparateur 25a émet un signal logique 1, sinon il émet un signal logique 0.

Le moyen de comparaison 25 comprend également un moyen de calcul 25d relié par une entrée à une horloge interne 25c et par une autre entrée à la sortie du comparateur 25a. Le moyen de calcul 25d est apte à émettre en sortie un signal portant le temps écoulé depuis que le signal logique émis par le comparateur 25a porte la valeur logique 1.

Le moyen de comparaison 25 comprend un comparateur 25e relié en entrée au moyen de calcul 25d et à une mémoire 25f comprenant une durée minimale de maintien de la pression de suralimentation, par exemple 0,3 sec.

Si la pression différentielle de suralimentation mesurée est inférieure à la pression différentielle de suralimentation mémorisée pendant une durée au moins égale à la durée minimale mémorisée, le comparateur 25e émet un signal logique 1, sinon il émet un signal logique 0.

Les moyens de comparaison 18,19,20,21,22,23,24,25 sont reliés en sortie à un opérateur logique ET référencé 26. L'opérateur logique 26 émet en sortie un signal de condition d'état égal à 1 lorsque chacun des moyens de comparaison émet en sortie un signal égal à 1.

L'opérateur logique 17 et l'opérateur logique 26 sont reliés par leurs sorties à un opérateur logique ET référencé 1c.

Les conditions d'apprentissage sont considérées satisfaites lorsque le signal de condition de stabilité et le signal de condition d'état portent les valeurs logiques 1. L'opérateur logique 1c émet alors un signal de conditions d'apprentissage portant la valeur logique 1.

Le moyen de commande des ailettes permet d'apprendre et de mémoriser des correctifs sur une cartographie de linéarisation de la commande des ailettes de la turbine à géométrie variable. Ces correctifs sont appris dans un référentiel proche de la caractéristique de la commande des ailettes de la turbine à géométrie variable et permettent de compenser et de tenir compte des principales sources de dérives et de dispersions de l'électrovanne et du poumon pneumatique.

Les correctifs ne sont appris que sur des points de fonctionnement en charge dans le but de compenser les dérives et les dispersions uniquement dans les domaines de fonctionnement transitoire présentant de forte charge du moteur (>75% de la pleine charge). De plus, l'application des correctifs de la cartographie de linéarisation de la commande est pondérée en fonction de la consigne de charge moteur pour ne pas perturber le fonctionnement de la suralimentation sur des points où les dispersions et dérives ont peu d'impact, c'est-à-dire lorsque la charge du moteur est faible.

En se référant à nouveau à la figure 1, on voit que le moyen d'apprentissage 2 de la commande comprend un sommateur 2b permettant d'effectuer la somme de la partie intégrale du régulateur 4 et de la commande de pré-positionnement issue de la cartographie de pré-positionnement 3. Lorsque le moyen de détermination 1 des conditions d'apprentissage indique que toutes les conditions d'apprentissage sont réunies, le commutateur 2c autorise la recopie de la valeur déterminée par le sommateur 2b dans une cartographie de commande 2d. La cartographie 2d comprend en abscisse la valeur issue de la cartographie de pré-positionnement 3 et en ordonnée la valeur corrigée issue du sommateur 2b.

La cartographie d'apprentissage 2d combine une cartographie de linéarisation avec une cartographie de valeurs apprises. Comme on a pu le voir, la cartographie d'apprentissage 2d mémorise la valeur issue du sommateur 2b lorsque les conditions d'apprentissage sont réunies. Toutefois, si une valeur a déjà été apprise pour les conditions d'apprentissage, la cartographie d'apprentissage est apte à associer une valeur corrigée à la valeur issue de la cartographie 3 de prépositionnement. La valeur corrigée issue de la cartographie d'apprentissage 2d est sommée à la valeur issue du régulateur 4 au sein du sommateur 6. Le sommateur 6 émet un signal de commande à l'actionneur de commande des ailettes de la turbine à géométrie variable.

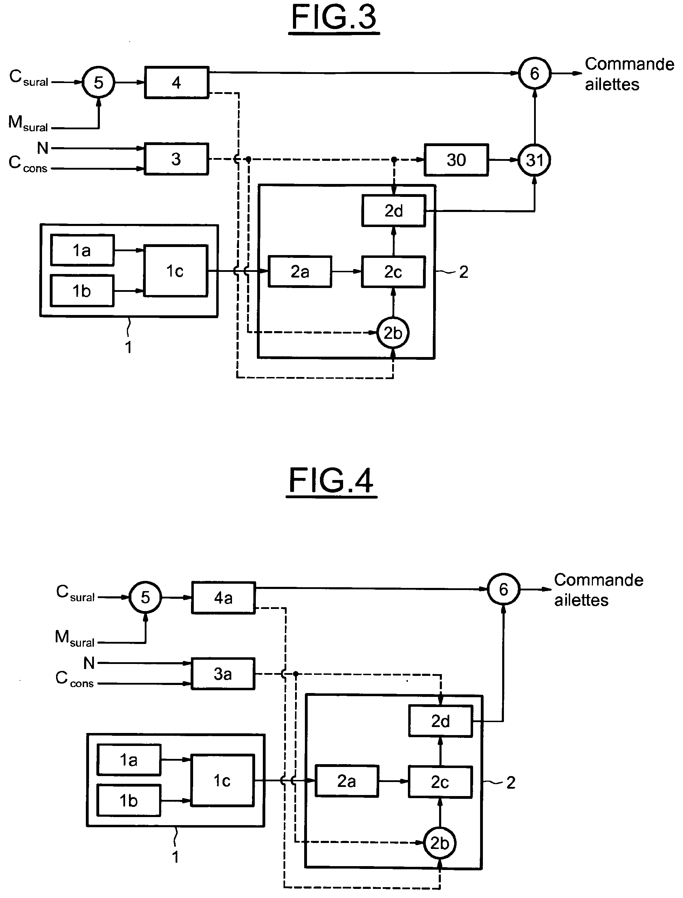

Alternativement, il est possible de dissocier la linéarisation de l'apprentissage par l'emploi d'une cartographie 30 de linéarisation comme cela est illustré sur la figure 3.

La cartographie de pré-positionnement 3 est corrigée par l'intermédiaire de la cartographie 30 de linéarisation. La cartographie de linéarisation 30 permet d'obtenir en sortie un signal de prépositionnement linéarisé en fonction du signal de pré-positionnement reçu de la cartographie de pré-positionnement 3.

Avant tout apprentissage, la cartographie de linéarisation est une droite de pente égale à 1, c'est-à-dire la courbe de linéarisation initiale (ou de référence) utilisée avec un moteur nominal pour déterminer le prépositionnement du turbocompresseur.

La cartographie 30 de linéarisation est elle-même corrigée en additionnant une correction au signal qu'elle émet. L'addition est réalisée par l'intermédiaire d'un sommateur 31 relié en sortie au sommateur 6.

Cette correction est issue du moyen d'apprentissage 2 de la commande et dépendante de la partie intégrale du régulateur 4 et du signal issu de la cartographie de pré-positionnement 3. La correction est apprise dans la cartographie d'apprentissage 2d lorsque toutes les conditions d'apprentissage sont réunies par un mécanisme similaire à celui décrit ci-dessus en relation avec la figure 1.

La figure 4 illustre l'apprentissage et la linéarisation dans le cadre d'une régulation en position des ailettes d'une turbine à grande vitesse. Comme on peut le voir, elle diffère de la figure 1 de par la présence d'un régulateur 4a de position des ailettes, d'une cartographie de pré-positionnement 3a et d'un moyen de linéarisation 2a de la position des ailettes avec apprentissage. Ces éléments diffèrent de ceux présents sur la figure 1 de par leurs signaux de sortie. Ces signaux de sortie sont ici des signaux de position des ailettes alors que ceux émis par les éléments 2, 3 et 4 sont des signaux de commande des ailettes homogènes à une position relative des ailettes entre une position fermée et une position ouverte.

Même si l'utilisation d'une régulation en position réduit fortement l'impact des dispersions et dérives de l'actionneur (notamment au niveau de l'électrovanne et du poumon), il peut être intéressant d'avoir un apprentissage sur une cartographie de linéarisation introduite entre la cartographie 3a de pré positionnement et le sommateur 6 de la boucle de régulation de la pression de suralimentation. L'apprentissage de la cartographie de linéarisation de la consigne de position permet de compenser les dérives et dispersions du système de commande de la tige de commande ailettes jusqu'aux ailettes.

Dans chacun des modes de réalisation décrits ci-dessus, l'apprentissage d'un point de la cartographie est suivi d'une interpolation des points adjacents permettant de maintenir une continuité de la commande.

De plus, l'apprentissage de la cartographie de linéarisation n'étant réalisé que sur des points de fonctionnement du moteur en forte charge (>75% de la pleine charge), l'apprentissage de la cartographie est pondéré en fonction de la consigne de charge du moteur. Cela permet de ne pas perturber le fonctionnement de la suralimentation lorsque les dispersions et dérives ont peu d'impact (faible charge moteur).

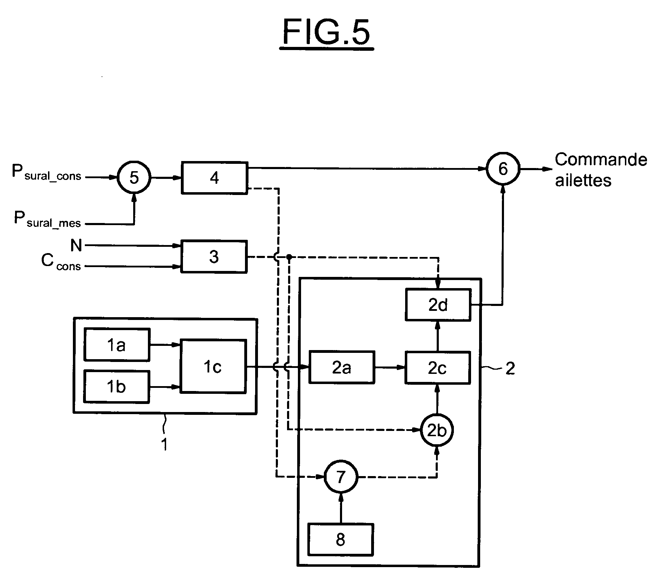

Sur la figure 5, similaire à la figure 1, on peut voir qu'un multiplicateur 7 et une cartographie 8 de pondération ont été introduits. Le multiplicateur 7 multiplie le signal portant la partie intégrale du régulateur 4 par un coefficient de pondération prédéterminé. Le résultat du multiplicateur 7 est reçu en entrée par le sommateur 2b afin de le sommer au signal reçu de la cartographie de pré-positionnement 3. Le coefficient de pondération prédéterminé est compris entre 0 et 100% selon la consigne de charge du moteur. Ce coefficient peut être mémorisé dans la cartographie 8 de pondération.

Bien qu'illustré ici sur la base du premier mode de réalisation illustré par la figure 1, la pondération du signal intégral du régulateur 4 peut être réalisée pour chacun des autres modes de réalisation.

Le système de commande permet de commander les ailettes d'une turbine à géométrie variable de sorte que l'endommagement et l'usure de la turbine sont limités.

## Revendications

1. Système de commande des ailettes d'une turbine à géométrie variable alimentant un moteur à combustion interne d'un véhicule automobile, **caractérisé par le fait qu'**il comprend
un soustracteur (5) apte à déterminer l'écart entre une consigne de pression de suralimentation et une mesure de pression de suralimentation,
un régulateur (4) de type proportionnel, intégral, dérivée apte à émettre en sortie un signal de commande à destination des ailettes d'une turbine de type à géométrie variable,
une cartographie (3) de pré-positionnement apte à déterminer une consigne de position des ailettes en fonction de la vitesse de rotation du moteur et d'une consigne de couple, et
un moyen de détermination (1) des conditions d'apprentissage apte à émettre un signal logique de commande à destination d'un moyen d'apprentissage (2) de la commande,
le moyen d'apprentissage (2) de la commande étant apte à émettre en sortie une correction du signal de commande à destination des ailettes d'une turbine de type à géométrie variable en fonction des signaux reçus de la cartographie (3) de pré-positionnement et du régulateur (4),
le moyen d'apprentissage (2) de la commande étant apte à apprendre les signaux de prépositionnement à réception d'un signal du moyen de détermination (1) des conditions d'apprentissage,
le moyen d'apprentissage (2) de la commande comprend en outre un sommateur (2b) du signal de la partie intégrale du régulateur (4) et du signal de la commande de pré-positionnement issu de la cartographie de prépositionnement (3), et un commutateur (2c) apte à autoriser la recopie de la valeur déterminée par le sommateur (2b) dans une cartographie de commande (2d) en fonction du signal reçu du moyen de détermination (1) des conditions d'apprentissage.

2. Système de commande selon la revendication 1, dans lequel le moyen de détermination (1) des conditions d'apprentissage comprend un moyen de détermination (1a) des conditions de stabilité et un moyen de détermination (1b) des conditions d'état reliés en sortie à un opérateur logique ET (1c).

3. Système de commande selon la revendication 1, dans lequel la cartographie (2d) est apte à linéariser les signaux de la commande de prépositionnement issus de la cartographie de pré-positionnement (3) lorsqu'une valeur déterminée par le sommateur (2b) n'est pas disponible.

4. Système de commande selon la revendication 1, comprenant une cartographie (30) de linéarisation distincte de la cartographie (2d) reliée en entrée à la cartographie (3) et en sortie au sommateur (6).

5. Système de commande selon l'une quelconque des revendications 2 à 4, dans lequel le moyen de détermination (1a) des conditions de stabilité comprend au moins un moyen de comparaison de paramètres physiques du moteur du véhicule à des valeurs de seuil,
le moyen de détermination (1a) des conditions de stabilité étant apte à émettre en sortie un signal logique vrai relatif à la stabilité du fonctionnement du moteur du véhicule lorsque tous les moyens de comparaison émettent un signal vrai.

6. Système de commande selon l'une quelconque des revendications 2 à 5, dans lequel le moyen de détermination (1b) des conditions d'état comprend au moins un moyen de comparaison de paramètres physiques de l'environnement du véhicule à des valeurs de seuil,
le moyen de détermination (1b) des conditions d'état étant apte à émettre en sortie un signal logique vrai relatif à l'état de l'environnement du véhicule lorsque tous les moyens de comparaison émettent un signal vrai.

7. Système de commande selon l'une quelconque des revendications 1 à 6, comprenant un multiplicateur (7) apte à multiplier le signal portant la partie intégrale du régulateur (4) par un coefficient de pondération prédéterminé mémorisé dans une cartographie (8) de pondération,
le signal émis par le multiplicateur (7) étant reçu en entrée par le sommateur (2b) afin de le sommer au signal reçu de la cartographie de prépositionnement (3).

8. Système de commande selon la revendication 7, dans lequel la cartographie (8) de pondération comprend un coefficient de pondération prédéterminé compris entre 0 et 100% selon la consigne de charge du moteur.

9. Système de commande selon l'une quelconque des revendications précédentes, dans lequel le signal de commande des ailettes est un signal en ouverture ou un signal en position.

## Patentansprüche

1. System zur Steuerung der Schaufeln einer Turbine mit variabler Geometrie, die einen Verbrennungsmotor eines Kraftfahrzeugs versorgt, **dadurch gekennzeichnet, dass** es enthält ein Subtrahierglied (5), das die Abweichung zwischen einem Ladedrucksollwert und einem Ladedruckmesswert bestimmen kann,
einen Regler (4) von der proportional-integralabgeleiteten Art, der am Ausgang ein Steuersignal an die Schaufeln einer Turbine von der Art mit variabler Geometrie senden kann,
ein Vorpositionierungskennfeld (3), das einen Stellungssollwert der Schaufeln abhängig von der Drehgeschwindigkeit des Motors und von einem Drehmomentsollwert bestimmen kann, und
eine Bestimmungseinrichtung (1) der Lernbedingungen, die ein logisches Steuersignal an eine Lerneinrichtung (2) der Steuerung senden kann,
wobei die Lerneinrichtung (2) der Steuerung am Ausgang eine Korrektur des Steuersignals an die Schaufeln einer Turbine von der Art mit variabler Geometrie abhängig von den vom Vorpositionierungskennfeld (3) und vom Regler (4) empfangenen Signalen senden kann,
wobei die Lerneinrichtung (2) der Steuerung die Vorpositionierungssignale bei Empfang eines Signals von der Bestimmungseinrichtung (1) der Lernbedingungen lernen kann,
wobei die Lerneinrichtung (2) der Steuerung außerdem ein Summierglied (2b) des Signals des integralen Teils des Reglers (4) und des Signals der Vorpositionierungssteuerung, das vom Vorpositionierungskennfeld (3) stammt, und einen Schalter (2c) enthält, der die Wiedergabe des vom Summierglied (2b) bestimmten Werts in einem Steuerkennfeld (2d) abhängig vom von der Bestimmungseinrichtung (1) der Lernbedingungen empfangenen Signal erlauben kann.

2. Steuersystem nach Anspruch 1, wobei die Bestimmungseinrichtung (1) der Lernbedingungen eine Bestimmungseinrichtung (1a) der Stabilitätsbedingungen und eine Bestimmungseinrichtung (1b) der Zustandsbedingungen enthält, die am Ausgang mit einem logischen UND-Operator (1c) verbunden ist.

3. Steuersystem nach Anspruch 1, wobei das Kennfeld (2d) die vom Vorpositionierungskennfeld (3) stammenden Signale der Vorpositionierungssteuerung linearisieren kann, wenn kein vom Summierglied (2b) bestimmter Wert zur Verfügung steht.

4. Steuersystem nach Anspruch 1, das ein Linearisierungskennfeld (30) enthält, das sich von dem Kennfeld (2d) unterscheidet, das am Eingang mit dem Kennfeld (3) und am Ausgang mit dem Summierglied (6) verbunden ist.

5. Steuersystem nach einem der Ansprüche 2 bis 4, wobei die Bestimmungseinrichtung (1a) der Stabilitätsbedingungen mindestens eine Vergleichseinrichtung physikalischer Parameter des Motors des Fahrzeugs mit Schwellenwerten enthält, wobei die Bestimmungseinrichtung (1a) der Stabilitätsbedingungen am Ausgang ein wahres logisches Signal senden kann, das sich auf die Stabilität des Betriebs des Motors des Fahrzeugs bezieht, wenn alle Vergleichseinrichtungen ein wahres Signal senden.

6. Steuersystem nach einem der Ansprüche 2 bis 5, wobei die Bestimmungseinrichtung (1b) der Zustandsbedingungen mindestens eine Vergleichseinrichtung von physikalischen Parametern der Umgebung des Fahrzeugs mit Schwellenwerten enthält, wobei die Bestimmungseinrichtung (1b) der Zustandsbedingungen am Ausgang ein wahres logisches Signal bezüglich des Zustands der Umgebung des Fahrzeugs senden kann, wenn alle Vergleichseinrichtungen ein wahres Signal senden.

7. Steuersystem nach einem der Ansprüche 1 bis 6, das einen Multiplikator (7) enthält, der das Signal, das den integralen Teil des Reglers (4) trägt, mit einem vorbestimmten Gewichtungskoeffizienten multiplizieren kann, der in einem Gewichtungskennfeld (8) gespeichert ist,
wobei das vom Multiplikator (7) gesendete Signal am Eingang vom Summierglied (2b) empfangen wird, um es zu dem Signal zu addieren, das vom Vorpositionierungskennfeld (3) empfangen wird.

8. Steuersystem nach Anspruch 7, wobei das Gewichtungskennfeld (8) einen vorbestimmten Gewichtungskoeffizienten enthält, der je nach dem Lastsollwert des Motors zwischen 0 und 100% liegt.

9. Steuersystem nach einem der vorhergehenden Ansprüche, wobei das Steuersignal der Schaufeln ein Öffnungs- oder ein Stellungssignal ist.

## Claims

1. System for controlling the vanes of a variable-geometry turbine supplying an internal combustion engine of a motor vehicle, **characterized in that** it includes
a subtracter (5) able to determine the difference between a turbocharging pressure setpoint and a turbocharging pressure measurement,
a proportional-integral-derivative controller (4) that is able to output a control signal to the vanes of a variable-geometry turbine,
a pre-positioning map (3) that is able to determine a vane position setpoint as a function of the rotational speed of the engine and of a torque setpoint, and means (1) for determining learning conditions that are able to emit a Boolean control signal to control learning means (2),
the control learning means (2) being able to output a correction of the control signal to the vanes of a variable-geometry turbine as a function of the signals received from the pre-positioning map (3) and from the controller (4),
the control learning means (2) being able to learn the pre-positioning signals on receipt of a signal from the means (1) for determining learning conditions, the control learning means (2) furthermore include a summer (2b) of the signal from the integral part of the controller (4) and the pre-positioning control signal received from the pre-positioning map (3), and a switch (2c) that is able to authorize the value determined by the summer (2b) to be copied into a control map (2d) as a function of the signal received from the means (1) for determining learning conditions.

2. Control system according to Claim 1, in which the means (1) for determining learning conditions include means (1a) for determining stability conditions and means (1b) for determining state conditions outputting to an AND Boolean operator (1c).

3. Control system according to Claim 1, in which the map (2d) is able to linearize the pre-positioning control signals received from the pre-positioning map (3) if no value determined by the summer (2b) is available.

4. Control system according to Claim 1, including a linearization map (30) distinct from the map (2d) receiving input from the map (3) and outputting to the summer (6).

5. Control system according to any one of Claims 2 to 4, in which the means (1a) for determining stability conditions include at least means for comparing physical parameters of the engine of the vehicle with threshold values,
the means (1a) for determining stability conditions being able to output a true Boolean signal relating to the operational stability of the engine of the vehicle if all of the comparison means emit a true signal.

6. Control system according to any one of Claims 2 to 5, in which the means (1b) for determining state conditions include at least means for comparing physical parameters of the environment of the vehicle with threshold values,
the means (1b) for determining state conditions being able to output a true Boolean signal relating to the state of the environment of the vehicle if all of the comparison means emit a true signal.

7. Control system according to any one of Claims 1 to 6, including a multiplicator (7) that is able to multiply the signal carrying the integral part of the controller (4) by a predetermined weighting coefficient stored in a weighting map (8),
the signal emitted by the multiplicator (7) being received as input by the summer (2b) in order to add it to the signal received from the pre-positioning map (3).

8. Control system according to Claim 7, in which the weighting map (8) includes a predetermined weighting coefficient of between 0% and 100% depending on the load setpoint of the engine.

9. Control system according to any one of the preceding claims, in which the vane control signal is an open signal or a positional signal.
